# EUROPEAN PATENT SPECIFICATION

(11) **EP 1 292 188 B1**
(45) Date of publication and mention of the grant of the patent: **15.11.2006**
(21) Application number: 01938858.6
(22) Date of filing: 11.06.2001
(51) Int. Cl.: A01K 75/00

(54) **DEVICE FOR LAYING OF A FISHING UTENSIL, IN PARTICULAR FOR SEINING, IN A BIN**
SETZWERKZEUG FÜR EINE FISCHVORRICHTUNG, INSBESONDERE FÜR WADEN
OUTIL DE POSE D'OUTIL DE PECHE, PARTICULIEREMENT POUR LE SENNAGE, DANS UNE TREMIE

(30) Priority: 09.06.2000 NO 20003000
(43) Date of publication of application: 19.03.2003
(73) Proprietor: Triplex AS, 6530 Averoy (NO)
(72) Inventor: BLIKAS, Per, Olav, N-6416 Molde (NO)
(74) Representative: Smith, Norman Ian
(86) International application number: PCT/NO2001/000245
(87) International publication number: WO 2001/093670

(56) References cited:
- US-A- 2 875 547
- PATENT ABSTRACTS OF JAPAN & JP 05 007 440 A (KAIKEN:KK) 19 January 1993

## Description

The puller may comprise a pair of rotatable, conical discs having the smallest portions facing each other. The discs may be mounted on separate shafts which are movable relatively to each other.

The disc shafts may, moreover, be mounted on a pair of arms which are movable relatively to each other by means of a cylinder with piston.

Further, the discs may be equipped with carrier elements adapted to grip around float elements on an upper line and weight elements on a lower line, respectively, on a seine.

The means for swinging the arms in vertical planes may be constituted by cylinders with pistons.

The arm system for moving the puller may be movably journalled relatively to the base.

Thus, during laying of a seine having two lines two such devices are used, which from respective sides of the bin deal with the respective longitudinal edges of the seine.This implies that the seine can be laid in several layers in the bin, with the upper line having the float elements collected at one side of the bin and the lower line having the weight elements collected at the opposite side of the bin. Moreover, the risk of tangling of float elements and/or weight elements is eliminated.

When the discs are mounted on separate, coaxial shafts which are axially or approximately axially movable relatively to each other, the fishing utensil can be moved into the puller when the discs have been moved somewhat apart.

Moreover, the device can be stationary mounted near the bin, and the arm system for movement of the puller can be movably mounted relatively to the base.

As mentioned, two such devices are used simultaneously for a seine having two lines, whereby one of the devices pulls the upper line and the other one pulls the lower line. A corresponding device is placed at the opposite side of the bin.

In practice the device which pulls the upper line will be situated farthest in on the deck of the boat, while the device pulling the lower line will be situated nearest the gunwale of the boat.

The present invention relates to a device for laying of fishing utensils, in particular for seining, in a bin according to the preamble of claim 1. Such a similar device is alredy disclosed by US-A-2 875 547. The device may be used in cooperation with a utensil crane which is pivotable about a mainly vertical axis, and which comprises a drum for feeding of the utensil during laying thereof in the bin. Moreover, two such devices may be used simultaneously for laying of a respective line on the same fishing utensil.

When laying of a utensil for seining in a utensil bin it is customary to use a utensil crane having a drum on the distal end of a crane arm. The utensil crane is moved in such a manner that the drum can be moved fore and aft, while it at the same time possibly is drawn sideways alternatively in each direction above the bin between each fore and aft movement. This way of laying the fishing utensil in the bin leads, however, to a rather random distribution of an upper line having float elements and a lower line having weight elements, provided along the longitudinal edges of the fishing utensil. There is also a certain risk of tangling of some of the float elements and/or weight elements, whereby the succeeding launching of the fishing utensil is made difficult.

By the present invention is provided a device for laying of a fishing utensil which remedies the above shortages and drawbacks.

The device according to the invention, for laying of fishing utensils, in particular for seining, in a utensil bin in a vessel upon hauling in, comprises a puller which can be driven in rotation and moved in a horisontal plane and is adapted for pulling of a line in the utensil in the bin. The puller is held by two mutually linked arms, and a first arm is journalled at one end for pivoting about a vertical axis and can swing i all vertical planes in which it is placed, while a second arm can swing relatively to the first arm, and means are provided for driving the arms in these movements.

The second arm may be coupled to an arm being parallel to the first arm, whereby the second arm is held horisontally irrespectively of the position of the first arm. Alternatively the second arm may also be able to swing vertically, independently of the swinging of the first arm.

The present device is in particular adapted to fishing utensils used for seining, and may, independently of the method used for hauling of the utensil, be used on board of all kinds of vessels for such fishing. All necessary movements of different components included in the device are performed during laying of the fishing utensil in a utensil bin, preferably by means of hydraulically operated drive units. Moreover, the movements of the device, the rotational speed and direction can be automatically controlled, possibly simultaneously syncronized, to the degree this is possible or desired, with other equipment for hauling and laying of the utensil in the bin. The automatic syncronization will, thus, cause that the respective components of the device all the time can be directed towards other equipment for hauling of the seine and simultaneously be kept in correct position for regularized laying of the utensil in the bin.

The device according to the invention may possibly cooperate with a utensil crane which is rotatable about a mainly vertical axis of rotation. The utensil crane is in a suitable manner fixedly mounted near the utensil bin in which the seine is to be laid upon hauling. At the end opposite of the mounting the utensil crane has a drum for feeding of the seine during laying in the bin. The drum is journalled in the utensil crane by means of a suitable fulcrum. The utensil crane may for instance consist of a pair of parallelogram arms which are moved by means of associated cylinders with pistons. Thereby, the drum may during laying of the seine be moved fore and aft above the bin, inwardly or outwardly and possibly upwardly and downwardly relatively to the mounting of the utensil crane. The drum may comprise its own hydraulic motor for rotation or for instance be freely rotating by use of separate hauling equipment in front of the utensil crane.

In the following the present invention will, with reference to the accompanying drawings, be explained more detailed. A utensil crane which may be used, but which does not constitute any part of the invention, is not shown, and neither is a bin in which the fishing utensil is to be laid.

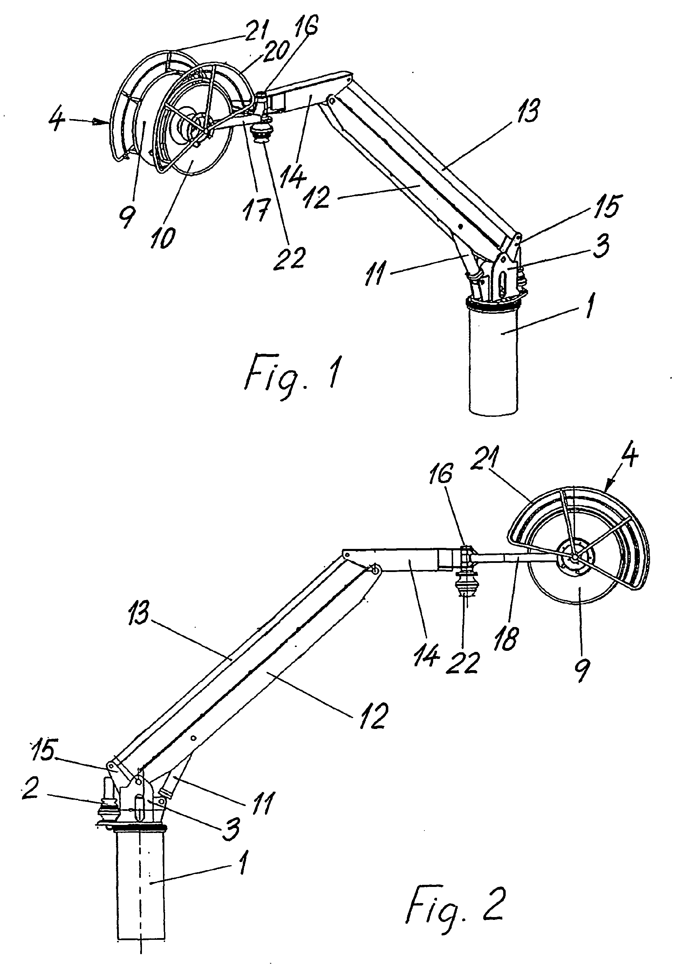

- Fig. 1: shows in perspective an example of a device according to the present invention, for laying of a fishing seine in a seine bin, whereby the device may cooperate with a not shown utensil crane which is pivotable about a vertical pivot axis and which is equipped with a drum for feeding of the seine.
- Fig. 2: is a lateral view showing the device in a corresponding position as in Fig. 1.
- Fig. 3: is a lateral view showing the device in another position.
- Fig. 4: shows, seen from above, the device in the same position as in Figs. 1 and 2.
- Fig. 5: shows the device seen from above, with the puller opened for insertion of a seine.
- Fig. 6: shows the device seen from above, with the puller pivoted approximately 120° relatively to the position shown in Fig. 4.

The shown embodiment of the device comprises a lower column 1, which is mounted in such a manner that it can take up large loads, and the remainder of the device is pivotably mounted on the column 1. Pivotal movement can be achieved with a drive assembly 2, which may for instance be a servo motor having a gear wheel in engagement with a toothed ring.

On the column 1 is mounted a first main arm 12, journalled for pivoting vertically on a bracket 3. At the distal end of the main arm 12 a second main arm 14 is pivotally mounted, and a parallel arm 13 along the main arm 12 is pivotally mounted on a lower auxiliary arm 15 and on an extension of the second main arm 14, and keeps the second main arm 14 horisontal, irrespectively of the position of the arms 12 and 13.

In order to cause that an upper line having float elements and a lower line having weight elements along the opposite longitudinal edges of the utensil shall be able to be laid in a regularized manner in a bin, the present device is equipped with a puller 4 which is movable relatively to the drum on the utensil crane by means of the column 1 and the arms 12, 13, 14, and the puller 4 is equipped with a pair of rotatable, conical discs 9, 10. These discs 9, 10 will during laying of the seine pull the float elements which have passed above and thus past the drum, while the discs 9, 10 simultaneously are brought to the desired position relatively to the drum above the bin by means of the arms 12, 13, 14. Thus, during laying of the seine not only the puller 4 is moved, but also the drum in the utensil crane, by movement of the pair of arms included in the utensil crane. Consequently, appropriate controlling of the movement of the puller 4 relatively to the movement of the drum will cause that the upper line having the float elements is laid together in a "bunch" having a desired width on one side of the bin and that the lower line having the weight elements is laid correspondingly together in a "bunch" having a desired width on the opposite side of the bin.

For movement of the arms 12, 13 and 14 a cylinder 11 with a piston is in the example shown mounted between the bracket 3 and the main arm 12, and adjusts the position of the arms 12, 13 and 14 in order to, possibly also by pivoting the arm system about the axis of the column 4, bring the puller 4 to the desired position relatively to the drum.

Moreover, the arm system may be mounted in a movable manner relatively to the fixed mounting of the utensil crane, for instance by means of a rail arrangement (not shown) which also permits pivoting thereof about a mainly vertical pivot axis. It will, however, be appreciated that the arm system alternatively may have a fixed mounting in a suitable distance from the mounting of the utensil crane.

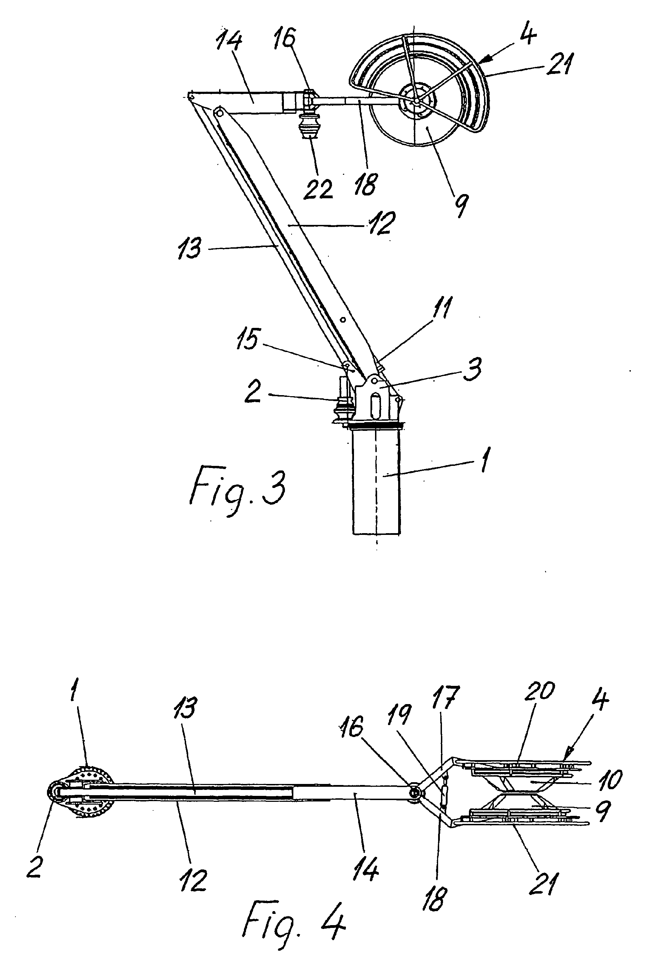

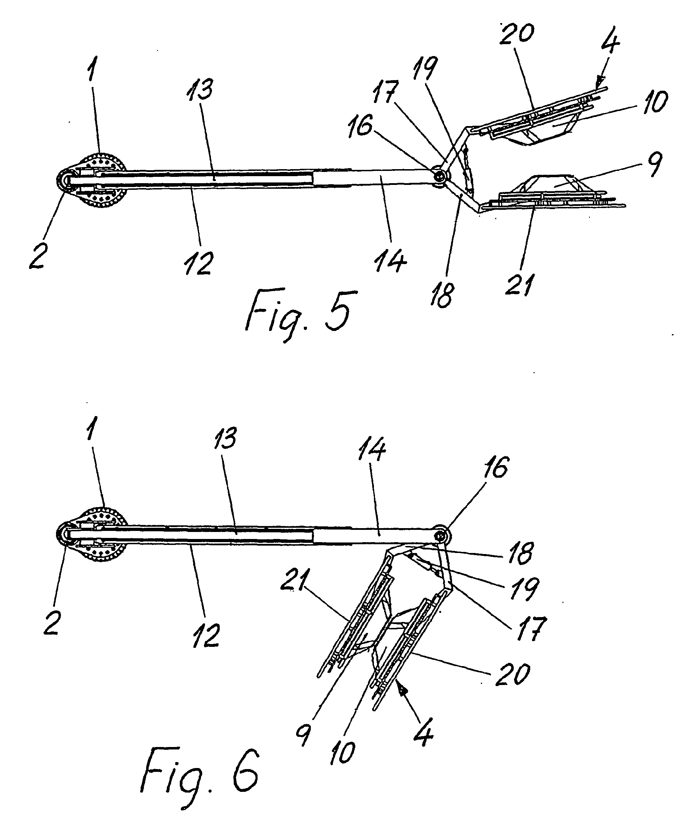

In order to permit that the puller 4 may be moved above and catch the upper line and the lower line, respectively, and thereby pull the float elements and the weight elements, respectively, the discs 9, 10 are mounted on a respective support arm 17, 18. As shown in the Figs. 4, 5 and 6 the support arms 17, 18 may be mounted pivotably at the distal end of the arm 14 by means of a joint 16, whereby the support arms 17, 18 can be moved relatively to each other by means of a cylinder 19 with piston. This implies that the support arms 17, 18 fastened at the distal end of the arm 14 can be pivoted away from and towards each other. Upon pivoting of the support arms 17, 18 apart there is large enough room for putting into place the upper line 5 having the float elements 6, which upon reverse pivoting come into contact with the discs 9, 10 in a predetermined position, i.e. a working position. Moreover, it is to be noted that the discs 9, 10 can only be moved as close to each other that there always remains an opening therebetween for free passage of the seine. Additionally, the support arms 17 and 18 can be pivoted about the joint 16 by a drive device 22, for instance a hydraulic motor, for pivoting the puller as a whole about the end of the arm 14.

The discs 9, 10 may be driven in rotation by hydraulic motors, and are of such a design that they by rotation can pull an upper line having float elements and a lower line having weight elements, respectively. Additionally they are, depending on the demand, either smooth or covered by a suitable friction coating. The discs 9, 10 may also be equipped with carrier elements (not shown) adapted to grip around at least one float element on an upper line and a weight element on a lower line, respectively. In order to ensure that the fishing utensil shall come in the desired direction towards the pulling zone where the discs 9, 10 have the smallest diameter, special guide means 20, 21, shown as wire lattices, may be mounted around portions thereof. In the case of uncontrolled pulling back of the seine the direction of rotation of the puller 4 can be reversed, and it may possibly be opened automatically, in order to release the grip around the upper line having the float elements and the lower line having the weight elements, respectively. Thereby, damaging of the puller 4 or the seine can be avoided.

Alternatively to the embodiment shown also the main arm 14 may be pivotable in the vertical plane. This may be accomplished by omitting the parallel arm 13 and by mounting a cylinder with piston between the main arms 12 and 14. Whether the main arm 14 is pivotable or not, the main arm 14 may be extendible, for instance by being telescopic.

The device is suited for operating hydraulically. Hydraulic lines may for instance be inserted in the column 1, which may contain a swivel coupling for further coupling to the arm system.

The device may be governed by an operator. Moreover, it is possible to control the device as an automatic robot, in that the movements are firstly performed by the operator and are "fed" to a computer for creating a program for controlling and coordinating all the drive assemblies. Thereupon, the device can operate automatically. It is of course possible to create a plurality of programs for such control, for instance for use for different types of fishing utensils, and it is possible to provide feedback to the controlling unit, for instance for correction of movements. Also the utensil crane, if present, can be included in such control and coordination.

## Claims

1. A device for laying of fishing utensils, in particular for seining, in a utensil bin in a vessel upon hauling, comprising a puller (4) which can be driven in rotation and moved in a horisontal plane and is adapted for pulling of a line in the utensil in the bin, said puller being held by two mutually linked arms (12; 13, 14), a first arm (12) being journalled at one end for pivoting about a vertical axis and able to swing i all vertical planes in which it is placed, while a second arm (14) can swing relatively to the first arm and means (11) are provided for causing these movements of the arms, **characterized in that** the puller (4) comprises two discs (9, 10) mounted on support arms (17, 18) which are movable relatively to each other in such a manner that there always remains an opening between the discs for free passage of a seine, and that the support arms (17, 18) are movable for controlled pivoting of the puller (4) as a whole about the end of the second arm (14).

2. A device as specified in claim 1, wherein the first arm is a double arm, having a main arm (12) and a parallel arm (13) being pivotally journalled with one end and being hinged to an extension of the second arm (14) with the other end.

3. A device as specified in claim 1 or 2, wherein the means for driving the arms is a cylinder (11) with piston.

4. A device as specified in claim 1, 2 or 3, wherein the support arms (17, 18) are movable relatively to each other by means of a cylinder (19) with piston.

5. A device as specified in any of the claims 1 to 4, wherein the discs (9, 10) are equipped with carrier elements adapted to grip around float elements on an upper line and weight elements on a lower line, respectively.

6. A device as specified in any of the claims 1 to 5, wherein the arm system (12, 13, 14) for movement of the puller (4) is movably mounted relatively to the base.

## Patentansprüche

1. Vorrichtung zum Legen von Fischereiwerkzeugen, insbesondere für die Wadenfischerei, in einen Werkzeugsbehälter in einem Fahrzeug nach dem Einholen, aufweisend eine Ziehvorrichtung (4), die drehend angetrieben und in einer horizontalen Ebene bewegt werden kann, und ausgebildet ist zum Ziehen einer Leine in dem Werkzeug im Behälter, welche Ziehvorrichtung durch zwei gegenseitig verbundene Arme (12; 13; 14) gehalten ist, einem ersten Arm (12), der an einem Ende mit einem Lagerzapfen versehen ist, zum Drehen um eine vertikale Achse, und in der Lage, in allen vertikalen Ebenen zu schwingen, in denen er platziert ist, während ein zweiter Arm (14) relativ zu dem ersten Arm schwingen kann, und Mittel (11) vorgesehen sind zum Bewirken dieser Bewegungen der Arme, **dadurch gekennzeichnet, dass** die Ziehvorrichtung (4) zwei Scheiben (9, 10) aufweist, die an Haltearmen (17, 18) befestigt sind, welche relativ zueinander in einer solchen Weise bewegbar sind, dass immer eine Öffnung zwischen den Scheiben für den freien Durchgang einer Wade verbleibt, und dass die Haltearme (17, 18) bewegbar sind für gesteuertes Schwenken der Ziehvorrichtung (4) als Ganzes um das Ende des zweiten Arms (14).

2. Vorrichtung nach Anspruch 1, bei der der erste Arm ein Doppelarm ist, mit einem Hauptarm (12) und einem parallelen Arm (13), dessen eines Ende schwenkbar mit einem Lagerzapfen versehen ist und dessen anderes Ende gelenkig mit einer Verlängerung des zweiten Arms (14) verbunden ist.

3. Vorrichtung nach Anspruch 1 oder 2, bei der die Mittel zum Antreiben der Arme ein Zylinder (11) mit Kolben sind.

4. Vorrichtung nach Anspruch 1, 2 oder 3, bei der die Haltearme (17, 18) mittels eines Zylinders (19) mit Kolben relativ zueinander bewegbar sind.

5. Vorrichtung nach einem der Ansprüche 1 bis 4, bei der die Scheiben (9, 10) mit Trägerelementen ausgestattet sind, die ausgebildet sind zum Greifen um Schwimmelemente an einer oberen Leine bzw. Gewichtselemente an einer unteren Leine.

6. Vorrichtung nach einem der Ansprüche 1 bis 5, bei der das Armsystem (12, 13, 14) für die Bewegung der Ziehvorrichtung (4) relativ zu der Basis bewegbar befestigt ist.

## Revendications

1. Dispositif de pose d'accessoires de pêche, en particulier pour la pêche à la senne, dans une benne à accessoires d'un navire lors du relevage, comprenant une poulie (4) qui peut être entraînée en rotation et déplacée dans un plan horizontal et est adaptée pour tirer une ligne dans l'accessoire dans la benne, ladite poulie étant tenue par deux bras mutuellement liés (12 ; 13, 14), un premier bras (12) étant monté sur palier à une extrémité pour pivoter autour d'un axe vertical et étant apte à pivoter dans tous les plans verticaux dans lesquels il est placé, tandis qu'un deuxième bras (14) peut pivoter par rapport au premier bras et un moyen (11) est prévu pour provoquer ces mouvements des bras, **caractérisé en ce que** la poulie (4) comprend deux disques (9, 10) montés sur des bras de support (17, 18) qui sont mobiles l'un par rapport à l'autre de manière telle qu'il reste toujours une ouverture entre les disques permettant le passage libre d'une senne, et **en ce que** les bras de support (17, 18) sont mobiles pour permettre le pivotement contrôlé de la poulie (4) dans son ensemble autour de l'extrémité du deuxième bras (14).

2. Dispositif selon la revendication 1, dans lequel le premier bras est un bras double comprenant un bras principal (12) et un bras parallèle (13) monté sur palier à pivotement avec une extrémité et articulé sur un prolongement du deuxième bras (14) avec l'autre extrémité.

3. Dispositif selon la revendication 1 ou 2, dans lequel le moyen pour entraîner les bras est un vérin (11) à piston.

4. Dispositif selon la revendication 1, 2 ou 3, dans lequel les bras de support (17, 18) sont mobiles l'un par rapport à l'autre grâce à un vérin (19) à piston.

5. Dispositif selon l'une quelconque des revendications 1 à 4, dans lequel les disques (9, 10) sont équipés d'éléments de support adaptés pour s'immobiliser sur des éléments flottants d'une ligne supérieure et sur des éléments pesants d'une ligne inférieure, respectivement.

6. Dispositif selon l'une quelconque des revendications 1 à 5, dans lequel le système à bras (12, 13, 14) pour le mouvement de la poulie (4) est monté de manière mobile par rapport à la base.
